# EUROPEAN PATENT SPECIFICATION

(11) **EP 2 497 395 B1**
(45) Date of publication and mention of the grant of the patent: **07.05.2014**
(21) Application number: 10796189.8
(22) Date of filing: 06.11.2010
(51) Int. Cl.: A47J 31/36

(54) **MACHINE AND PROCESS OF EXTRACTING BEVERAGES BY INFUSION**
MASCHINE UND VERFAHREN FÜR DEN AUFGUSS VON GETRÄNKEN
MACHINE ET PROCÉDÉ D'EXTRACTION DE BOISSONS PAR INFUSION

(30) Priority: 06.11.2009 PT 10481009
(43) Date of publication of application: 12.09.2012
(73) Proprietor: Novadelta-Comércio e Industria de Cafés, S.A., 1900-709 Lisboa (PT)
(72) Inventor: NABEIRO, Rui, Miguel, 7370-112 Campo Maior (PT)
(74) Representative: Miranda de Sousa, João Paulo Vaz
(86) International application number: PCT/PT2010/000046
(87) International publication number: WO 2011/056085

(56) References cited:
- EP-A1- 1 859 713

## Description

### Technical Domain of the Invention

The present invention refers to a machine for extraction of beverages, notably coffee, tea or other beverages obtained by infusion, based on the use of a capsule that is flown through by a hot fluid.

In particular, the present invention refers to a machine of extraction of beverages by infusion that presents a force amplifying disposition that allows reducing the dimension of the arm associated with the force to be developed and transmitted so as to retain said capsule in position while it is flown through by a hot fluid.

The present invention further refers to a process for operation of a machine of extraction of beverages by infusion that presents a force amplifying disposition according to the invention.

### Background of the Invention

There are different known types of dispositions and mechanisms, integrated into machines of extraction of beverages by infusion, based upon the use of a capsule, so as to drive one said capsule to a predetermined position, and retain it there for at least the period during which it is flown through by a hot fluid (infusion cycle), being thereafter evacuated to the outside of the machine after said period.

The US 2002/ 148356 A1 reveals a machine of the aforementioned type, in which during the infusion cycle, a capsule is retained in position in a respective position space in shape of a glass support, closed by means of a cover. According to this document, such retention is obtained by means of the disposition of certain surfaces in the interior of the position space that interact with at least one respective irregularity disposed on the side wall of the capsule. In this case, the capsules are placed in the respective position space and this is taken to the position of infusion by horizontal displacement means, of the drawer type. A closing cover of the position space is moved by a connection wing actuated by means of an electric motor along vertical rails. Said document does not disclose means for amplifying forces.

The EP 1219217 A reveals a machine of the aforementioned type, presenting an infusion unit that includes a sliding disposition, a retaining disposition and an overture and roll-back disposition, operatively interconnected so as to support a pressure of up to 4 bar. In this case, the force transmission by a handle is carried out by the sliding disposition acting along a constant direction and being supported by elastic springs disposed on sliding means.

The WO 2009104071 A1 reveals a machine of the aforementioned class, including moving means for the mutual movement of an infusion head unit and of housing unit for a capsule. The solution disclosed by this document does not include force amplifying means that allow reducing the magnitude of the force to be applied, in this case manually, so as to retain said capsule in position during its crossing by a hot fluid. Therefore, the moving means are of big dimension in relation to the machine.

The EP-A-1859713 discloses a machine for the extraction of beverages by infusion comprising an admission for a capsule containing an aromatic substance, an infusion head, one driving arm pivotable around a fixed axis (22), a further arm pivotable around a fixed arm (30).

None of the dispositions known in the state of technique integrated in machines of extracting of beverages by infusion, presents a solution that reduces the dimension of the force to be applied and the complexity of the means to carry out a retention in position and discharge of a capsule in the interior of a respective machine of extraction of beverages by infusion.

### Brief Description of the Invention

The machine of extraction of beverages by infusion according to the invention, includes a force amplifying device of the articulated lever type, presenting at least one driving arm, at least one amplifying arm and at least one pressure arm, and several arms connected in such a way, by means of common pivot joints that can rotate around axis preferentially disposed parallel relative to each other and at different levels, and that allows amplifying the driving force applied upon a respective first arm (driving arm and/ or amplifying arms), so as to apply such a pressure force, through the at least one pressure arm, upon the capsule that the latter is placed in position and reliably retained in position during its crossing by a hot fluid (infusion cycle).

As a result of the inclusion of said force amplifying device, the machine according to the invention, when manually actuated, does not require a big lever arm to place and retain in position a capsule to be used, and to release it after said capsule has been used, for which a lever arm of smaller dimensions is enough. The machine according to the invention therefore results of smaller dimensions and easier to operate and transport.

The machine according to the invention allows that the capsule follows a path along a single direction along the interior of the machine, notably driven by the force of gravity, and that its placement and retention in infusion position by a pressure force, along such path, is carried out by means of a single device requiring a driving force that is substantially smaller than said pressure force, wherefrom results a big simplification and reduction of dimension of the components included for actuating the capsule.

The machine according to the invention is characterized in that it presents a smaller extension of pipes for internal circulation of the hot beverage extracted by infusion than other machines available in the market, which allows less accumulation of dirt deposits, notably rests of the aromatic substance used for the purpose, and, therefore, increased hygiene in its use.

The goal of the present invention is, therefore, to reduce the dimension of the arm associated with the force required to place and retain a capsule in position during its crossing by a hot fluid and, thereafter, discharge it out of the infusion zone, this way simplifying the means involved in its operation and reducing respective dimensions.

The fulfillment of this goal makes the machine of extraction of beverages by infusion according to the invention, more compact than others available in the market, allowing obtaining a smaller final equipment that is easier to operate, store and transport.

The aforementioned goal is solved according to the invention by means of a machine of extraction of beverages according to claim 1, and of a process for the operation of such a machine according to claim 26.

Preferred embodiments and optimizations according to the invention are described in the secondary claims.

### Description of the Figures

The invention shall now be described in greater detail, without limiting character and as way of examples, based on two preferred embodiments, shown in the attached Figures, notably:
- Figure 1:: a simplified view in isometric perspective, partially in cut, of a machine (M) according to the invention, with admission and discharge of capsule by manual actuation;
- Figure 2a:: a perspective view of the toggle lever device integrated in a machine (M) according to the invention, according to Figure 1;
- Figura 2b:: a side view of the toggle lever device of Figure 2a, when in the open position (A);
- Figura 3a:: a perspective view of the toggle lever device integrated in a machine (M) according to the invention, according to Figure 1;
- Figura 3b:: a side view of the toggle lever device according to Figure 3a, when in the closed position (B);
- Figura 4:: a side view with partial cross-section view along the front symmetry axis of the machine according to the invention, including toggle lever device of Figure 1, when in the closed position (B) with inserted capsule (C);
- Figura 5:: a perspective detail view of the relative disposition of the infusion head and pressure arm;
- Figura 6a:: a front view of the infusion head in a machine according to the invention;
- Figura 6b:: a front view of the side of the pressure arm that is opposing the infusion head;
- Figura 7:: a perspective view of the toggle lever disposition integrated into a machine according to the invention, with capsule admission and discharge by means of mechanical actuation of the driving arm;
- Figura 8:: a perspective view of the toggle lever disposition integrated into a machine according to the invention, with mechanical actuation of two amplifying arms.

### Description of Embodiments of the Invention

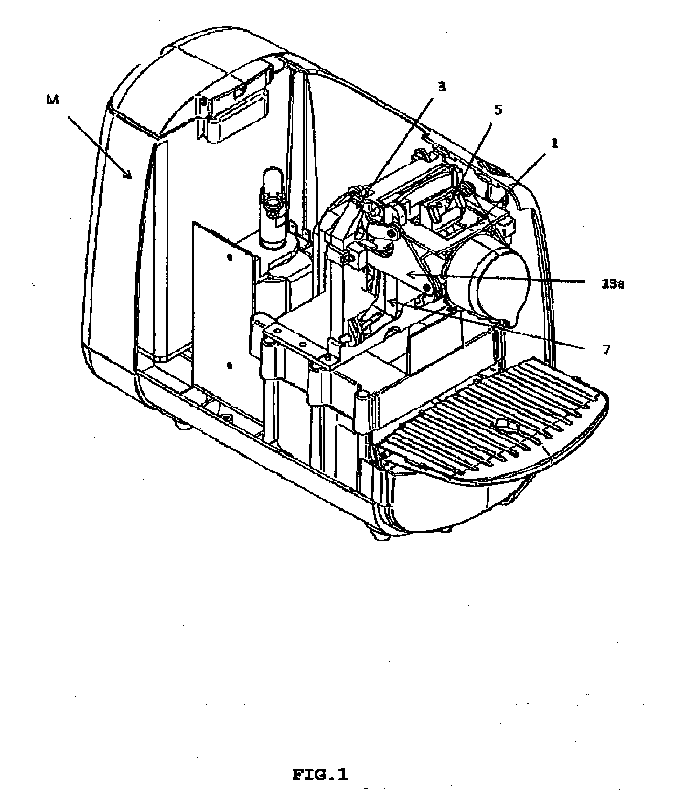

**Figure 1** shows a simplified view in isometric perspective, partially open, of a machine (M) according to the invention, of manual actuation and with a toggle lever device disposed on its frontal zone.

Machine (M) presents an admission through (1) for admission of a respective capsule (C) and an infusion head (2), both not visible here, preferentially disposed along the symmetry axis of machine (M), seen in front view, and attached directly to a respective chassis support (3).

Machine (M) further presents a toggle lever device including at least a driving arm (5), a pressure arm (7) and amplifying arms (13a, 13b), that rotate in articulated fashion around supports disposed fixed on the chassis support (3).

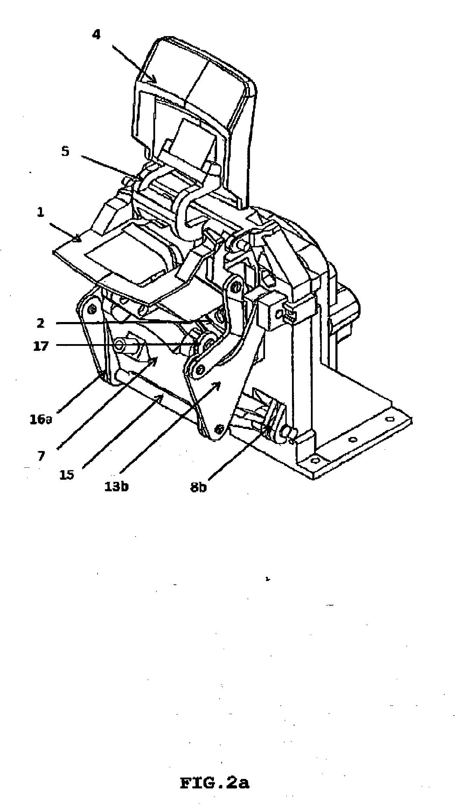

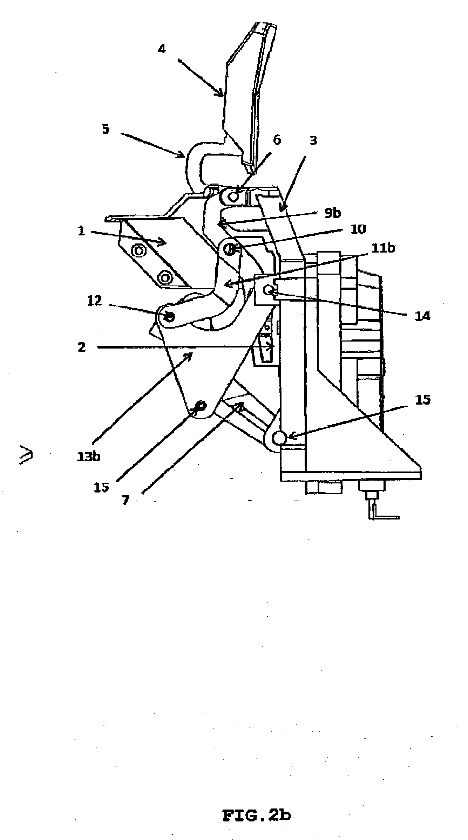

**Figure 2a** shows a perspective view of a toggle lever device, integrated into an embodiment of the machine (M) according to the invention, when in the open position (A). **Figure 2b** shows a respective side view.

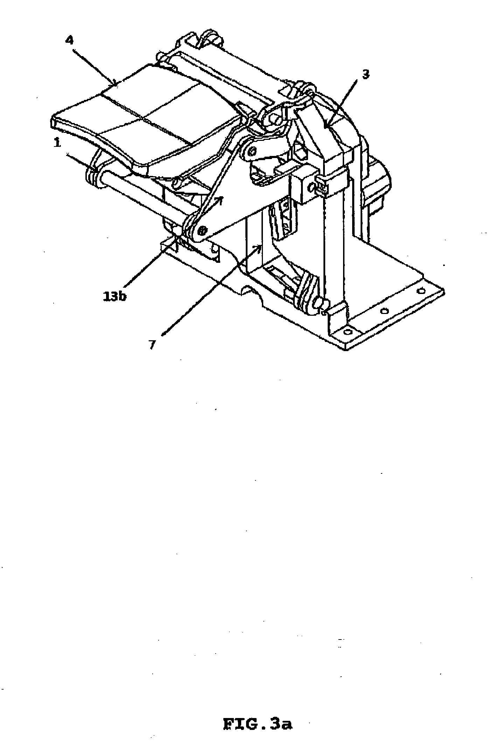

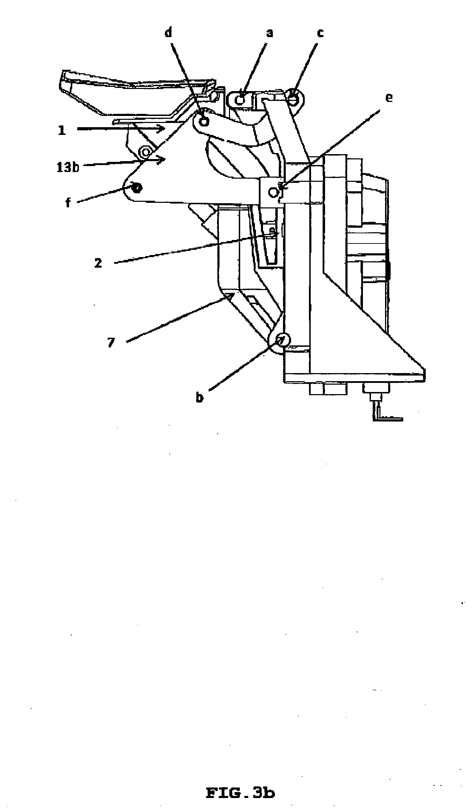

**Figures 3a** **and** **3b** show equivalent views of the toggle lever device, when in the closed position (B).

A handle (4) is directly connected, preferentially by means of screws, to a driving arm (5). The driving arm (5) is configured in a single piece with two arms united together so that they engage around an axis, and is disposed so that, by applying a driving force (F), it may rotate inside of the opening of the admission through (1), from an open position (A) to a closed position (B). By applying an equivalent force in opposite direction, the movement takes place in the reversed sequence, from said closed position (B) to the open position (A).

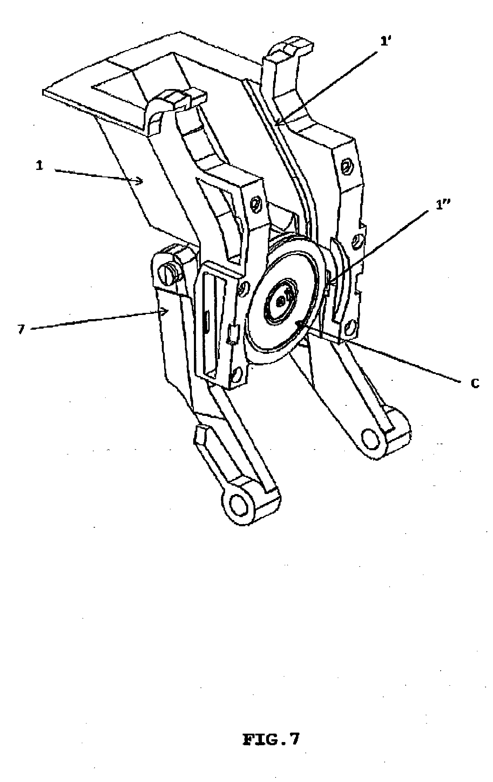

When in an open position, the handle is substantially oriented along the vertical, thereby not obstructing the opening of the admission through, so as to allow the insertion of a respective capsule (C) - here not represented. The admission through (1) preferentially presents an opening section with guiding notches (1') (see Figure 7), in which the capsule engages and that facilitate its introduction in correct position, and its conduction, by means of the force of gravity, to the space in front of a respective infusion head (2).

According to the present invention, by applying a driving force (F), applied manually upon said handle (4), the driving arm (5), supported in a fixed rotating shaft (6) so that it can pivot around a respective axis (a), transmits a rotation moment to a disposition of toggle arms (9a, 9b, 11a, 11b, 13a, 13b, 16a, 16b) that transmit the resulting moment of the driving force (F) applied by said driving arm (5), to a pressure arm (7). The pressure arm (7) is disposed in fixed rotation supports (8a, 8b), so that it can pivot around a fixed axis (b), thus applying a pressure force (P), greater that the driving force (F), upon a capsule (C), against said infusion head (2).

In the case of this embodiment, the driving arm (5) is connected by means of a fixed rotating shaft (6), disposed along a fixed axis (a), to two second arms (9a, 9b) disposed on the extremities of said fixed rotating shaft (6) and that are connected, by respective mobile rotary joints (10a, 10b), aligned with each other along a mobile axis (c), to respective third arms (11a, 11b) that, on their turn, are connected, by means of respective mobile rotary joints (12a, 12b), aligned with each other along a mobile axis (d), to respective amplifying arms (13a, 13b). The amplifying arms (13a, 13b) rotate around respective fixed rotation supports (14a, 14b), disposed in the chassis support (3) and aligned with each other along a fixed axis (e), and are united, by means of a mobile rotation shaft (15) disposed along a mobile axis (f), to fourth arms (16a, 16b) that are connected, by means of respective mobile rotary joints (17a, 17b), disposed along a mobile axis (g), to the pressure arm (7).

The toggle lever disposition described above is preferentially disposed so that the pairs of second arms (9a, 9b), third arms (11a, 11b), amplifying arms (13a, 13b) and fourth arms (16a, 16b) operate on both sides of the admission through (1). Respective toggle elements with the driving arm (5) and pressure arm (7) are disposed along mobile axis (c, d, f, g) that are disposed and move substantially parallel to each other and relative to the fixed axis (a, b, e).

When in an open position (A), the driving arm (5) is rotated substantially outside of the admission through (1), and the pressure arm (7) at a maximum distance from the infusion head (2). This maximum distance is limited by the mobile rotation shaft (15) that connects the amplifying arms (13a, 13b) and the fourth arms (16a, 16b). The fourth arms (16a, 16b) are oriented substantially along the vertical.

When in a closed position (B), the distance of the pressure arm (7) to the infusion head (2) is minimal and previously selected in such a way that it presses the capsule disposed on its front with a certain pressure against said infusion head (2). In the case of the represented embodiment, this distance is, amongst other elements, also defined by two extension elements of the admission through (1) that work as stoppers of the pressure arm (7) when the latter is in the closed position (B). In this position, the top of the pressure arm (7) is preferentially substantially aligned with the top of the infusion head (2). The fourth arms (16a, 16b) are oriented substantially along the horizontal. The pressure force (P) is of at least 8 bar, preferentially at least 4 bar, more preferentially at least 2 bar.

When in the closed position (B), the upper surface of the handle (4) is preferentially aligned with the further exterior surface of the chassis of machine (M). The correct position (B) is preferentially signaled to the user by mechanic or electronic means disposed on the admission through (1) and/ or on the handle (4) .

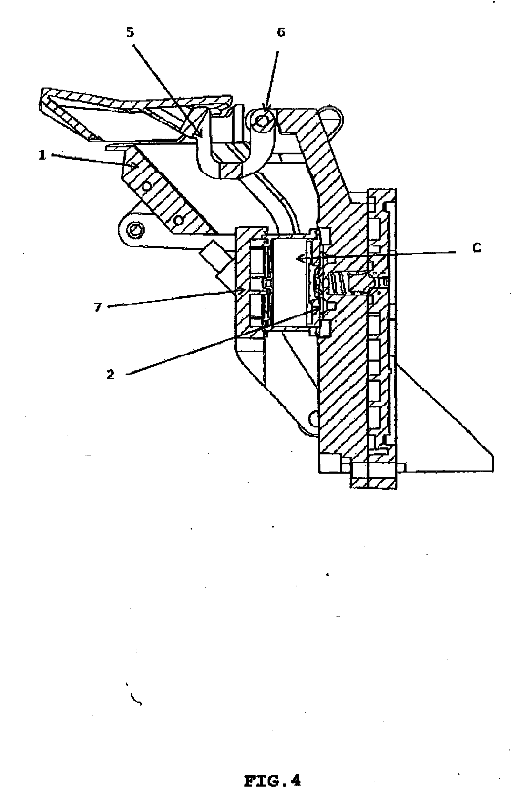

**Figure 4** shows a side view, partially in cross sectional view, of the toggle lever disposition described above and to be integrated into a machine (M) according to the invention, in the closed position (B).

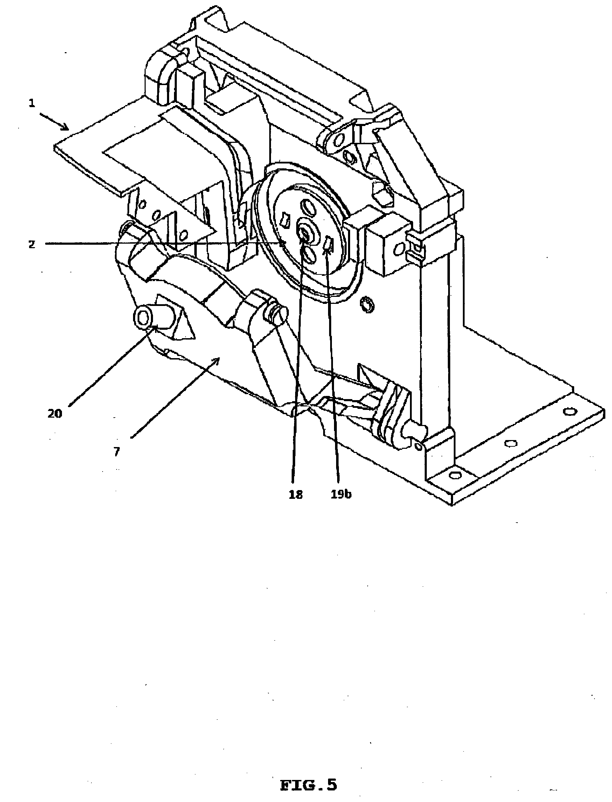

**Figure 5** shows a simplified perspective view of the relative disposition of the admission through (1), infusion head (2) and pressure arm (7).

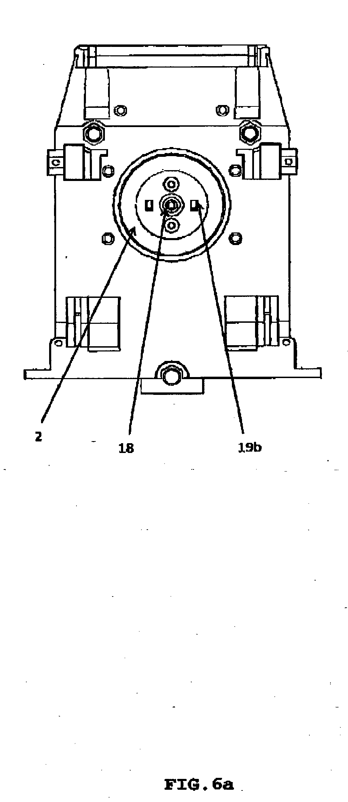

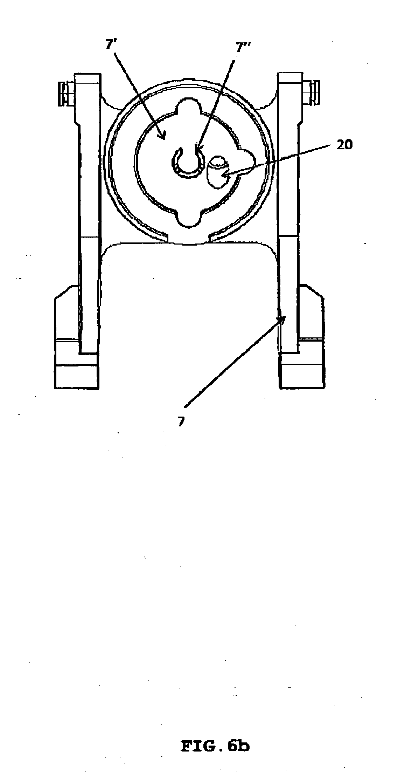

**Figure 6a** shows a frontal view of the infusion head (2) and **Figure 6b** shows a frontal view of the side of the pressure arm (7) that is directly opposing to said infusion head.

The infusion head (2) presents in appropriate way a pressure boss (18) that increases the mechanic pressure upon a central zone of easier rupture of the capsule (C) that way advantageously reducing the hydraulic pressure required for said rupture. The infusion head (2) further presents elastic deflection tongues (19a, 19b), sized and disposed so as to be deflected by means of the pressure that is applied upon them by a capsule (C) in closed position (B), and to push the latter, recovering its initial shape, when the pressure arm (7) is moved outside of the closed position (B). The capsule then falls by action of the force of gravity, outside of the zone of the infusion head (2).

The pressure arm (7) advantageously presents a pressure surface (7') that engages, preferentially in leak free manner, with said capsule (C). On this pressure surface (7') there is disposed a passage projection (7") with a notch, through which the beverage obtained by infusion is conducted to circulate before exiting. The pressure arm (7) presents a passage hole that connects the infusion liquid exit on the capsule and the exterior part of the pressure arm (7), where there is disposed a respective infusion exit (20). This infusion exit (20) is advantageously disposed at a relative height closer to the exit of the machine (M) that is above the recipient, for example cup, to be filled with said infusion, for example coffee.

**Figure 7** shows a view from the back and in perspective of the pressure arm (7), admission through (1) and capsule (C). The capsule (C) reaches this position after having been introduced into the overture of the through (1) and slides, by action of the force of gravity, along respective guiding notches (1'), until it reaches respective retention surfaces (1"). In this position, the capsule (C) is still at a distance from said infusion head (2). The capsule (C) is then pushed, by action of the pressure arm (7) against said infusion head (2), so that it leaves the retention surfaces (1") and remains only held by action of the pressure force (P) that deforms said elastic deflection tongues (19a, 19b), thus reaching and remaining in the closed position (B) during the infusion cycle. Once the pressure force (P) is null, these tongues (19a, 19b) recover their initial shape, distancing the capsule (C) from the infusion head (2), so that it then falls by action of the force of gravity.

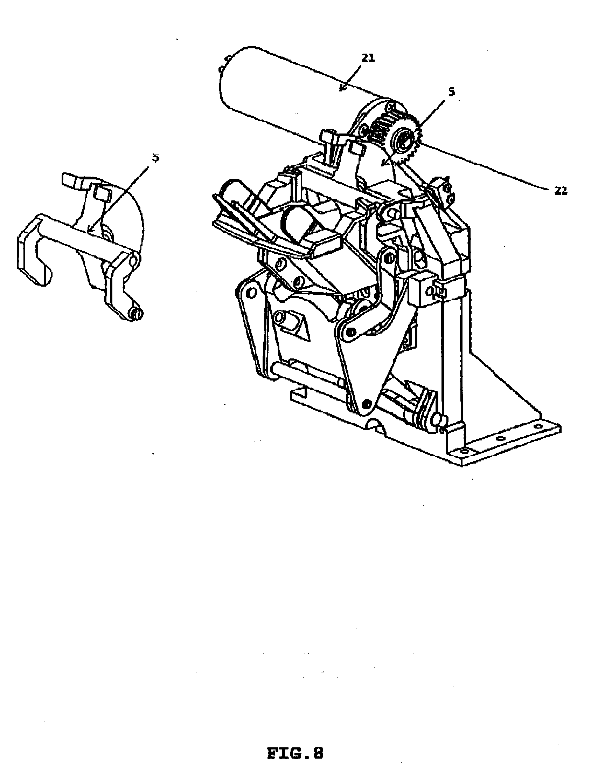

**Figure 8** is a perspective view, of the right-hand side, of a machine (M') according to the invention, including a toggle lever device, in this case driven by mechanical means. In this case the driving force (F) is generated by a driving device (21), preferentially in the form of electric motor, and transmitted to the driving arm (5) by a gear element (22), preferentially in the form of a mechanic gear element in positive lock. On the lefthand side of Figure 8, there is an increased representation of the driving arm (5) that in such an embodiment is configured in a single piece with a semi-circular element that presents a gear-rack that interacts with the gear element (22).

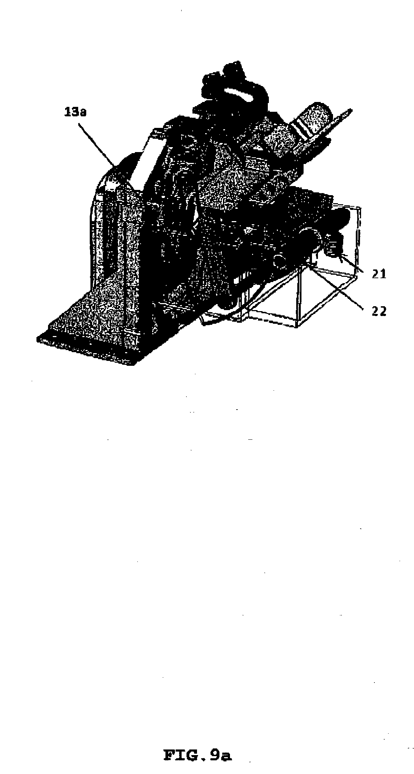

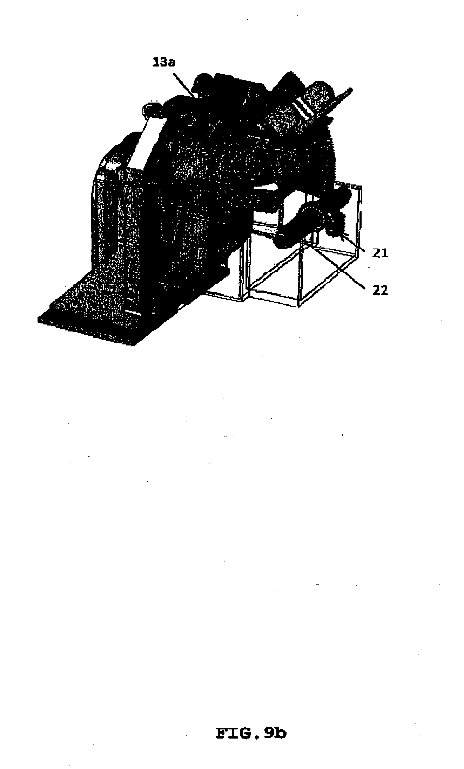

**Figures 9a** and **9b** show a view in perspective of another embodiment of the machine (M') according to the invention, also mechanically driven, in the open position (A) and closed position (B), respectively. In this case, the driving force (F) generated by the driving device (21) is transmitted by means of a gear element (22), preferentially of the gear-rack type, to the two amplifying arms (13a, 13b), which then amplify the resulting rotation moment to the driving arm (5) and to the pressure arm (7).

A process for operation of a machine (M, M') according to the invention includes the insertion of a capsule (C), placed in correct position, manually or mechanically, in the overture of the admission through (1). The driving arm (5) and the pressure arm (7) are in an open position (A), in which the driving arm (5) does not obstruct the admission through (1) and the pressure arm (7) is at the maximum distance from the infusion head (2). The capsule (C) slides by means of the force of gravity along the admission through (1), down to the space in front of the infusion head (2), in which two retention tongues (20) disposed on the infusion (2) head initially retain it.

A certain driving force (F) is thereafter applied, manually or mechanically, in a direction, preferentially downwards, upon the handle (4), directly connected to the at least one driving arm (5), so that said force is in this case transmitted in such a way by the toggle lever disposition associated with the driving arm (5), that the pressure arm (7) pivots on its fixed rotation supports (8a, 8b), into a position (B) in which it presses in such a way the capsule (C) against the infusion head (2), that the pressure boss (18) applies pressure upon the surface of the capsule (C). Alternatively the driving force (F) is generated by a driving device (21) and transmitted by means of a gear element to the at least one driving arm (5) and/ or to the at least one amplifying arm (13a, 13b). In this closed position (B), the pressure arm (7) reliably retains the capsule in position and the admission through (5) is closed by the handle (4).

During the infusion cycle, the capsule (C) is flown through by a hot fluid, for example water, that is supplied from a respective overture in the infusion head (2). After passing through the capsule (C), the beverage obtained by infusion is forced to pass through a connection crossing the pressure arm (7), until reaching a respective infusion exit (20).

After conclusion of the infusion cycle, a user of the machine according to the invention, or a driving device integrated in it, applies a certain driving force (F), this time in the opposite direction, for example upwards, upon said handle (4) or directly upon the driving arm (5). As a result, the pressure arm (7) moves away from said capsule (C) that falls, by means of the force of gravity, to a respective collection space.

In a preferred embodiment according to the invention, in the case of a machine with mechanic actuation, the process is initiated by actuating a selection command of the type of substance to be used in the infusion cycle. As a result of the actuation of this command, a capsule corresponding to the selected substance, is inserted in the admission through (1) and a driving force (F) is generated and applied so that the capsule (C) is pressed by the pressure arm (7) against the infusion head (2), in position (B). The start of the infusion cycle is thereafter started by the actuation of another command, preferentially one of selection of the quantity of beverage to be obtained by infusion. Other commands are possible to carry out the process without leaving the scope of the invention.

### List of References

- M: machine for extraction of beverages by infusion, of manual actuation
- C: capsule, or similar
- 1: admission through
- 1': guiding notches
- 1": retention surfaces
- 2: infusion head
- 3: chassis support
- 4: handle
- 5: driving arm
- 6: fixed rotation shaft
- a: fixed axis
- 7: pressure arm
- 7': pressure surface
- 7": passage projection
- 8a, 8b: fixed rotation supports
- b: fixed axis
- 9a, 9b: second arms
- 10a, 10b: mobile pivot joints
- c: mobile axis
- 11a, 11b: third arms
- 12a, 12b: mobile pivot joints
- d: mobile axis
- 13a, 13b: amplifying arms
- 14a, 14b: fixed rotation supports
- e: fixed axis
- 15: mobile rotation shaft
- f: mobile axis
- 16a, 16b: fourth arms
- 17a, 17b: mobile pivot joints
- g: mobile axis
- M': machine for extraction of beverages by infusion, of mechanical actuation
- 18: pressure boss
- 19a, 19b: elastic deformation tongues
- 20: infusion head
- 21: driving device
- 22: gear element

## Claims

1. Machine for the extraction of beverages by infusion comprising an admission through (1), for a capsule (C) containing an aromatic substance, an infusion head (2), **characterized in that** it further comprises at least one driving arm (5) disposed so that it may pivot around a first fixed axis (a), at least one amplifying arm (13a, 13b) connected to said first fixed axis (a) and disposed so that it may pivot around a second fixed axis (e) and at least one pressure arm (7) connected to said second fixed axis (e) and disposed so that it may pivot around a third fixed axis (b), in such a way that by means of applying a driving force (F) along a certain direction upon the, at least one driving arm (5), and/ or upon the at least one amplifying arm (13a, 13b), the at least one pressure arm (7) applies a pressure force (P) upon the capsule (C) against the infusion head (2) that is greater than the driving force (F).

2. Machine according to claim 1, **characterized in that** by means of applying a driving force (F) along the opposite direction upon the at least one driving arm (F), and/ or upon the at least one amplifying arm (13a, 13b), the at least one pressure arm (7) rotates by a maximum angle, thereby moving away from the infusion head (2) up to a previously determined limit distance.

3. Machine according to claim 1, **characterized in that** the pressure force (P) at least corresponds to the force necessary to cause rupture of a zone in said capsule (C) that has been previously configured for easier rupture, when pressed against the infusion head (2).

4. Machine according to claim 2, **characterized in that** said maximum displacement corresponds to a rotation of the at least one pressure arm (7) of at most 90°, preferentially at most 45°, more preferentially at most 35°.

5. Machine according to claim 3, **characterized in that** said pressure force (P) is of at least 8 bar, preferentially at least 4 bar, more preferentially at least 2 bar.

6. Machine according to claims 1 - 5, **characterized in that** the at least one driving arm (5) is disposed so that, by means of applying a driving force (F), it may pivot around at least one rotation support, preferentially a rotation shaft (6), disposed fixed and aligned with the fixed axis (a), and substantially aligned, preferentially centered with the admission through (1), and **in that** the at least one pressure arm (7) is disposed so that by means of applying a driving force (F), it may pivot substantially in opposition to said infusion head (2), around at least one rotation support, disposed in a fixed position and aligned with the fixed axis (b).

7. Machine according to claims 1 - 6, **characterized in that** said driving force (F) applied along a direction, is transmitted by a plurality of pairs of transmission arms (9a, 9b, 11a, 11b, 13a, 13b, 16a, 16b) from the at least one driving arm (5) and/ or the at least one amplifying arm (13a, 13b), to the at least one pressure arm (7), thereby moving the latter from an open position (A), in which the at least one pressure arm (7) is at a distance from said infusion head (2) that admits a capsule (C) in the space in-between, to a closed position (B) in which the at least one pressure arm (7) presses said capsule (C) with a pressure force (P) against said infusion head (2), and **in that** said driving force (F) applied in opposite direction, is transmitted by said plurality of said pairs of transmission arms (9a, 9b, 11a, 11b, 13a, 13b, 16a, 16b) from the at least one driving arm (5) and/ or the at least one amplifying arm (13a, 13b) to the at least one pressure arm (7), thereby displacing this from said closed position (B) to a position in which the pressure force (P) upon said capsule (C) is null and up to a limit distance from the at least one pressure arm (7) to said infusion head (2) that corresponds to said open position (A).

8. Machine according to claim 7, **characterized in that** said plurality of pairs of arms (9a, 9b, 11a, 11b, 13a, 13b, 16a, 16b) is disposed on both sides of said admission through (1) and said infusion head (2).

9. Machine according to any of the claims 1 - 8, **characterized in that** the at least one driving arm (5) is connected, by means of a rotation shaft (6), disposed fixed along said first fixed axis (a), to a pair of second arms (9a, 9b), each of which is disposed so as to pivot jointly with said driving arm (5) around said first fixed axis (a), and connected through respective pivot joints (10a, 10b), disposed along a mobile axis (c), to respective third arms (11a, 11b), each of which is disposed so that it can rotate around said mobile axis (c), and connected by means of mobile pivot joints (12a, 12b), disposed along a mobile axis (d), to respective amplifying arms (13a, 13b), each of which is supported so that it can rotate around rotation supports (14a, 14b) disposed fixed along said second fixed axis (e), and connected by means of a rotation shaft (15), disposed along a mobile axis (f), to a pair of respective fourth arms (16a, 16b), each of which is disposed so that it may rotate around said mobile axis (f) and a mobile axis (g), and connected to the at least one pressure arm (7) by means of respective mobile pivot joints (17a, 17b), disposed along said mobile axis (g).

10. Machine according to claim 9, **characterized in that** said mobile axis (c, d, f, g) are disposed and move in a substantially parallel disposition relative to each other and relative to said fixed axis (a, e, b).

11. Machine according to claims 1 - 10, **characterized in that** the driving force (F) is generated manually and transmitted to the at least one driving arm (5) by means of a handle (4) directly connected to said driving arm (5).

12. Machine according to claim 11, **characterized in that** the driving force (F) is generated by means of a driving device (21), preferentially by means of an electric motor, and is transmitted to the at least one driving arm (5) and/ or to the at least one amplifying arm (13a, 13b) by means of a gear element (22), preferentially by positive lock, particularly preferred of the gear-rack type.

13. Machine according to claim 12, **characterized in that** said gear element (22) directly engages with a respective gear element directly connected, preferentially in a single piece with the at least one driving arm (5) and/ or with the at least one amplifying arm (13a, 13b).

14. Machine according to claims 11 or 12, **characterized in that** the connection of said handle (4) to the at least one driving arm (5) and the connection of said gear element (22) to the at least one driving arm (5) and/ or to the at least one amplifying arm (13a, 13b), are executed by attaching means or positive lock means.

15. Machine according to claims 11 or 14, **characterized in that** the at least one driving arm (5) is configured in a single piece with said handle (4).

16. Machine according to claims 1 - 15, **characterized in that** the at least one driving arm (5) presents an angled configuration do that it may rotate by an angle equal or superior to 90°, at least partially inside of said admission through (1).

17. Machine according to claims 1 - 16, **characterized in that** the at least one amplifying arm (13a, 13b) presents a substantially triangular configuration, with possibility of pivoting around at least the extremity disposed fixed in the chassis support (3).

18. Machine according to claims 1 - 17, **characterized in that** the at least one pressure arm (7) is disposed and presents a configuration that, when in the open position (A), allows the passage of a capsule (C) along the extension of said admission through (2).

19. Machine according to claims 1 - 18, **characterized in that** the at least one pressure arm (7) presents at least one pressure surface (7') for, when in the closed position (B), applying a pressure force (P), preferentially substantially over a surface upon a capsule (C), against said infusion head.

20. Machine according to claim 19, **characterized in that** said pressure surface (7') presents a shape and/ or a respective fitting notch that, at least when in said closed position (B), engages at least partially with said capsule (C).

21. Machine according to claims 19 - 20, **characterized in that** said pressure surface (7') presents a passage projection (7"), disposed centered with said (C), so that the beverage obtained by infusion exits said capsule (C), passes through said passage projection (7") and temporarily circulates, before it reaches a beverage exit (20).

22. Machine according to claims 19- 21, **characterized in that** the at least one pressure arm (7) presents a beverage exit (20) of the beverage obtained by extraction of infusion that is connected, preferentially by means of a pipe, to the infusion exit of the machine.

23. Machine according to claims 19 - 22, **characterized in that** said beverage exit (20) is disposed oriented obliquely upwards.

24. Machine according to claim 7, **characterized in that** said transmission arms(9a, 9b, 11a, 11b, 13a, 13b, 16a, 16b) present a substantially flat format.

25. Machine according to claims 1 and 7, **characterized in that** said driving (5), pressure (7), amplifying (13a, 13b) arms, and said transmission arms (9a, 9b, 11a, 11b, 16a, 16b) are produced in metal or in polymeric material.

26. Process of extracting beverages by infusion using a machine according to any of the claims 1 - 25, **characterized in that** it includes the steps of:
- admission of a capsule (C) through an admission through (1) with the at least one driving arm (5) in a open position (A),
- generation and/ or application of a driving force (F) along a direction upon the at least one driving arm (5) and/ or upon the at least one amplifying arm (13a, 13b), driving the at least one pressure arm (7) from an open position (A) to a closed position (B),
- rupture of a previously configured zone of said capsule (C), when pressed with a pressure force (P) by said pressure arm (7), against said infusion head (2), to a closed position (B),
- flow through of said capsule (C) by a hot liquid that circulates from said infusion head (2) and circulates through the at least one pressure arm (7),
- generation and application of a driving force (F) in opposite direction upon said at least one driving arm (5) and/ or the at least one amplifying arm (13a, 13b), removing said pressure arm (7) from said closed position (B) and releasing said capsule.

27. Process according to claim 26, **characterized in that** the generation of said driving force (F) is carried out manually, or mechanically, by means of a driving device (22), preferentially of the electromechanical type.

28. Process according to claims 26 and 27, **characterized in that** the begin of the capsule (C) admission procedure and movement until its positioning in said closed position (B) is started by means of a respective command disposed in the machine (M'), preferentially a selection command of the type of aromatic substance to be used.

29. Process according to claims 26 - 28, **characterized in that** the procedure of flow through the capsule (C) is started by means of a respective command disposed in the machine, preferentially a selection command of the quantity of infusion beverage to extract.

30. Process according to claims 26 - 29, **characterized in that** the movement of said capsule (C) inside of the machine, from the admission of it in to the admission, through (1), is substantially driven by the force of gravity.

## Patentansprüche

1. Maschine zur Entnahme von Getränken durch Infusion, umfassend eine Eingangsöffnung (1) für eine Kapsel (C), die eine aromatische Substanz, einen Brühkopf (2) enthält, **gekennzeichnet dadurch, dass** es ferner mindestens einen Antriebshebel (5) umfasst, der so angeordnet ist, dass es sich um eine erste feste Achse (a) drehen kann, mindestens einen Verstärkungshebel (13a, 13b), der an der genannten ersten festen Achse (a) verbunden und so angeordnet ist, dass er sich um eine zweite feste Achse (e) drehen kann, und mindestens einen Druckhebel (7), der auf der genannten zweiten feststehenden Achse (e) verbunden und so angeordnet ist, dass es um eine dritte feste Achse (b) drehen kann, so dass durch Anlegen einer Antriebskraft (F) nach einer bestimmten Richtung an dem mindestens einen Betätigungshebel (5) und/oder an dem mindestens einen Verstärkerhebel (13a, 13b), der mindestens einen Druckhebel (7), eine Presskraft (P) auf der Kapsel (C) gegen den Brühkopf (2), der größer als die Antriebskraft (F) ist, ausübt.

2. Maschine nach Anspruch 1, **dadurch gekennzeichnet, dass** durch Anlegen einer Antriebskraft (F) in die entgegen gesetzte Richtung in der mindestens ein Antriebshebel (F) und/oder in der mindestens ein Verstärkerhebel (13a, 13b), dreht der mindestens ein Druckhebel (7) sich in einem maximalen Winkel, wodurch sie sich vom Brühkopf (2) zu einem vorbestimmten Abstand entfernt.

3. Maschine nach Anspruch 1, **dadurch gekennzeichnet, dass** die Druckkraft (P) mindestens der notwendigen Kraft entspricht, die zum Bruch eines Bereiches der genannten Kapsel (C) führt, die zuvor für eine einfache Bruch konfiguriert wurde, wenn sie gegen dem Brühkopf (2) gedrückt wird.

4. Maschine nach Anspruch 2, **dadurch gekennzeichnet, dass** die genannte maximale Verschiebung einer Drehung von mindestens eines Druckhebels (7) von höchstens 90°, vorzugsweise von höchstens 45°, besonders vorzugsweise von höchstens 35° entspricht.

5. Maschine nach Anspruch 3, **dadurch gekennzeichnet, dass** die genannte Druckkraft (P) einen Wert von mindestens 8 bar, vorzugsweise von mindestens 4 bar und besonders vorzugsweise mindestens 2 bar aufweist.

6. Maschine nach einem der Ansprüche 1-5, **dadurch gekennzeichnet, dass** mindestens ein Antriebshebel (5) so angeordnet ist, dass es sich durch Anlegen einer Antriebskraft (F) um wenigstens ein Drehlager, vorzugsweise eine Drehwelle (6) drehen kann, die zu der festen Achse (a) parallel und befestigt und im wesentlichen vorzugsweise mittig zu der Eingangsöffnung (1) parallel angeordnet ist, und dass mindestens ein Druckhebel (7) so angeordnet ist, dass es sich durch Anlegen einer Antriebskraft (F) wesentlich gegenüber dem Brühkopf (2) drehen kann, um zumindest ein Drehlager, das in einer festen Position und parallel zu der festen Achse (b) angeordnet ist.

7. Maschine nach einem der Ansprüche 1-6, **dadurch gekennzeichnet, dass** die genannte in einer Richtung angelegte Antriebskraft (F) durch mehrere Paare von Übertragungshebeln (9a, 9b, 11a 11b, 13a, 13b, 16a, 16b) von der mindestens ein Antriebshebel (5) und/oder der mindestens ein Verstärkerhebel (13a, 13b) auf der mindestens ein Druckhebel (7), wodurch der Letzte von einer offenen Position (A), in der der mindestens ein Druckhebel (7) in einem Abstand von dem genannten Brühkopf (2) ist, welcher eine Kapsel (C) in den Zwischenraum bis zu einer geschlossenen Position (B) aufnimmt, in der der mindestens ein Druckhebel (7) die genannte Kapsel (C) mit einer Presskraft (P) gegen den genannten Braukopf (2) drückt, und dass der genannte in die entgegengesetzte Richtung angelegte Antriebskraft (F), durch die genannten mehrere Paare von Übertragungshebeln (9a, 9b, 11a, 11b, 13a, 13b, 16a, 16b) von dem mindestens ein Antriebshebel (5) und/oder mindestens ein Verstärkerhebel (13a, 13b), auf den mindestens ein Druckhebel (7) übertragen ist, wodurch es von der genannten geschlossenen Position (B) zu einer Position verschoben ist, in der die Druckkraft (P) auf der Kapsel (C) Null und der Abstand bis zu einer Grenze von mindestens ein Druckhebel (7) bis zu dem genannten Braukopf (2) ist, die der genannten geöffneten Position (A) entspricht.

8. Maschine nach Anspruch 7, **gekennzeichnet dadurch, dass** die genannte Mehrzahl von Hebelpaare (9a, 9b, 11a 11b, 13a, 13b, 16a, 16b) auf beiden Seiten der genannten Eingangsöffnung (1) und des genannten Brühkopfs (2) angeordnet ist.

9. Maschine nach einem der Ansprüche 1-8, **dadurch gekennzeichnet, dass** mindestens ein Antriebshebel (5), mittels einer entlang der genannten ersten festen Achse (a) befestigten Drehwelle (6), mit ein Paar von zweiten Hebeln (9a, 9b) verbunden ist, die jeweils so positioniert sind, dass sie gemeinsam mit dem genannten Antriebshebel (5) um den genannten ersten festen Achse (a) drehen, und die mittels jeweiliger in einer beweglichen Achse (c) angeordneten Drehgelenke (10a, 10b) an jeweiligen dritten Hebeln (11a, 11b) verbunden sind, die jeweils so positioniert sind, dass sie sich um die genannte bewegliche Achse (c) drehen kann und mittels der entlang einer beweglichen Achse (d) angeordneten Drehgelenke (12a, 12b) zu den jeweiligen Verstärkerhebeln (13a, 13b) verbunden ist, die jeweils so gelagert sind, so dass sie sich entlang der genannten zweiten festen Achse (e) angeordneten Drehlager (14a, 14b) drehen kann und die mittels einer entlang einer beweglichen Achse (f) angeordneten Drehwelle (15) mit einem Paar von vier entsprechenden Armen (16a, 16b) verbunden ist, die jeweils so positioniert sind, dass sie sich um die genannte bewegliche Achse (f) und eine bewegliche Achse (g) drehen kann, und mit mindestens einen Druckhebel (7) mittels jeweilig beweglichen entlang der genannten beweglichen Achse (g) angeordneten Drehgelenke (17a, 17b) verbunden ist.

10. Maschine nach Anspruch 9, **dadurch gekennzeichnet, dass** die genannten beweglichen Achsen (c, d, f, g) in einer wesentlich parallelen Stellung relativ zueinander und relativ zu der genannten festen Achsen (a, e, b) angeordnet sind und sich bewegen.

11. Maschine nach einem der Ansprüche 1-10, **dadurch gekennzeichnet, dass** die Antriebskraft (F) manuell erzeugt ist und auf den mindestens ein Antriebsarm (5) mittels eines Griffs (4) übertragen ist, der direkt mit der genannten Antriebsarm (5) verbunden ist.

12. Maschine nach Anspruch 11, **dadurch gekennzeichnet, dass** die Antriebskraft (F) mittels einer Antriebseinrichtung (21), vorzugsweise mittels eines Elektromotors erzeugt ist, und auf den mindestens ein Antriebshebel (5) und/oder mindestens ein Verstärkerhebel (13a, 13b) mittels eines Zahnelements (22) übertragen ist, vorzugsweise durch eine formschlussige Sicherung, besonders bevorzugt eine Zahnstange-Typ Sicherung.

13. Maschine nach Anspruch 12, **dadurch gekennzeichnet, dass** das genannte Zahnelement (22) direkt mit einem entsprechenden Zahnelement in Eingriff steht, das vorzugsweise einteilig mit dem mindestens ein Antriebshebel (5) und/oder dem mindestens ein Verstärkerhebel (13a, 13b) direkt verbunden ist.

14. Maschine nach einem der Ansprüche 11 oder 12, **dadurch gekennzeichnet, dass** die Verbindung des genannten Griffs (4) mit dem mindestens ein Antriebshebel (5) und die Verbindung des genannten Zahnelements (22) mit dem mindestens ein Antriebshebel (5) und/oder dem mindestens ein Verstärkerhebel (13a, 13b) mittels Befestigungs- oder formschlussige Mitteln durchgeführt ist.

15. Maschine nach einem der Ansprüche 11 oder 14, **dadurch gekennzeichnet, dass** mindestens ein Antriebshebel (5) einteilig mit dem genannten Griff (4) ausgebildet ist.

16. Maschine nach einem der Ansprüche 1-15, **dadurch gekennzeichnet, dass** der mindestens ein Antriebshebel (5) eine geneigte Konfiguration aufweist, so dass es sich in einem Winkel von oder mehr als 90° zumindest teilweise im Inneren der genannten Eingangsöffnung (1) drehen kann.

17. Maschine nach einem der Ansprüche 1-16, **dadurch gekennzeichnet, dass** der mindestens ein Verstärkerhebel (13a, 13b) eine wesentlich dreieckige Konfiguration aufweist, mit der Möglichkeit, zumindest um das im Tragrahmen (3) befestigte, angeordnete Ende zu drehen.

18. Maschine nach einem der Ansprüche 1-17, **dadurch gekennzeichnet, dass** der mindestens ein Drückhebel (7) angeordnet ist und eine Konfiguration aufweist, die den Durchgang einer Kapsel (C) in der Verlängerung der genannten Eingangsöffnung (2) bei einer offenen Position (A) ermöglicht.

19. Maschine nach einem der Ansprüche 1-18, **dadurch gekennzeichnet, dass** der mindestens ein Druckhebel (7) mindestens eine Druckfläche (7') zu dem Zweck aufweist, wenn sie in der geschlossenen Position (B) angewendet wird, um eine Druckkraft (P), vorzugsweise wesentlich auf einer Fläche von einer Kapsel (C) gegen dem genannten Brühkopf auszuüben.

20. Maschine nach Anspruch 19, **dadurch gekennzeichnet, dass** die genannte Druckfläche (7') eine Form und/oder einen entsprechenden Beschlagversatz aufweist, die zumindest teilweise die Kapsel (C) greift, wenn es in der oben erwähnten geschlossenen Position (B) ist.

21. Maschine nach einem der Ansprüche 19-20, **dadurch gekennzeichnet, dass** die genannte Druckfläche (7') einen Vorsprungsabschnitt (7") aufweist, die zentriert mit der obigen (C) angeordnet ist, so dass das durch Infusion erhaltene Getränk die genannte Kapsel (C) verlässt, durch den genannten Vorsprungsabschnitt (7") tritt und vorübergehend zirkuliert, bevor es einen Getränkeauslauf (20) erreicht.

22. Maschine nach einem der Ansprüche 19-21, **dadurch gekennzeichnet, dass** der mindestens ein Druckhebel (7) einen Getränkeauslauf (20) für das durch Infusionsextraktion erhaltene Getränk aufweist, der vorzugsweise über eine Leitung mit dem Infusionsauslass der Maschine verknüpft wird.

23. Maschine nach einem der Ansprüche 19-22, **dadurch gekennzeichnet, dass** der genannte Getränkeauslauf (20) schräg nach oben angeordnet ist.

24. Maschine nach Anspruch 7, **dadurch gekennzeichnet, dass** die genannten Übertragungshebel (9a, 9b, 11a, 11b 13a, 13b, 16a, 16b) eine in wesentlich flacher Form aufweisen.

25. Maschine nach einem der Ansprüche 1 und 7, **dadurch gekennzeichnet, dass** die genannten Antriebshebel (5), Druckhebel (7), Verstärkerhebel (13a, 13b) und die genannten Übertragungshebel (9a, 9b, 11a, 11b, 16a, 16b) aus Metall oder aus einem Polymermaterial hergestellt sind.

26. Maschine zur Entnahme von Getränken durch Infusion unter Verwendung einer Maschine nach einem der Ansprüche 1-25, **dadurch gekennzeichnet, dass** folgende Schritte umfasst:
- Einnahme von einer Kapsel (C) durch eine Eingangsöffnung (1), wobei der mindestens ein Antriebshebel (5) in einer offenen Position (A) ist,
- Erzeugung und/oder Aufbringung einer Antriebskraft (F) entlang einer Richtung an den mindestens ein Antriebshebel (5) und/oder an den mindestens ein Verstärkerhebel (13a, 13b), wobei der mindestens ein Druckhebel (7) von einer Offenen Position (A) in eine geschlossene Position (B) verschoben ist,
- Bruch eines Bereiches der Kapsel (C), der zuvor konfiguriert wurde, wenn es mittels einer Presskraft (P) von dem genannten Druckhebel (7) gegen dem genannten Brühkopf (2), bis zu einer geschlossenen Position (B) gedrückt ist,
- Durchströmen der Kapsel (C) mit einer heißen Flüssigkeit, die aus dem genannten Brühkopf (2) strömt und durch den mindestens ein Druckhebel (7) strömt,
- Erzeugung und Aufbringung einer Antriebskraft (F) in entgegengesetzte Richtung an den genannten mindestens ein Antriebshebel (5) und/oder an den mindestens ein Verstärkerhebel (13a, 13b), wobei der genannte Druckhebel (7) von einer geschlossenen Position (B) verschoben und die Kapsel freigegeben ist.

27. Verfahren nach Anspruch 26, **dadurch gekennzeichnet, dass** die Erzeugung der genannten Antriebskraft (F) manuell oder mechanisch mittels einer Antriebseinrichtung (22), vorzugsweise des elektromechanischen Typs, durchgeführt wird.

28. Verfahren nach einem den Ansprüchen 26 und 27, **dadurch gekennzeichnet, dass** der Beginn des Eindringungsprozesses und der Bewegung der Kapsel (C), bis zu seiner Platzierung in der oben erwähnten geschlossenen Position (B), durch einen entsprechend in der Maschine (M') angeordneten Befehl gestartet ist, vorzugsweise ein Anwahlbefehl der Art der gewünschten aromatischen Substanz.

29. Verfahren nach einem der Ansprüche 26-28, **dadurch gekennzeichnet, dass** der Durchfluss durch die Kapsel (C) durch einen entsprechenden in der Maschine angeordneten Befehl gestartet ist, vorzugsweise ein Anwahlbefehl der gewünschten Menge des Infusionsgetränks.

30. Verfahren nach einem der Ansprüche 26-29, **dadurch gekennzeichnet, dass** die Bewegung der genannten Kapsel (C) in der Maschine, von deren Aufnahme in die Eingangsöffnung (1), wesentlich durch Schwerkraft bewirkt ist.

## Revendications

1. Machine pour l'extraction de boissons par infusion, comprenant une ouverture d'admission (1), pour une capsule (C) qui contient une substance aromatique, une tête d'infusion (2), **caractérisée en ce qu'**elle comprend encore au moins un bras d'entraînement (5) placé de sorte qu'il puisse pivoter autour d'un premier axe fixe (a), au moins un bras d'amplification (13a, 13b) lié au susdit premier axe fixe (a) et placé de sorte qu'il puisse pivoter autour d'un second axe fixe (e) et au moins un bras de pression (7) lié au susdit second axe fixe (e) et placé de sorte qu'il puisse pivoter autour d'un troisième axe fixe (b), de telle sorte que, par l'application d'une force d'entraînement (F) selon une certaine direction vers le au moins un bras d'entraînement (5) et/ou vers le au moins un bras d'amplification (13a, 13b), le au moins un bras de pression (7) applique une force de pression (P) sur la capsule (C) contre la tête d'infusion (2), qui est supérieure à la force d'entraînement (F).

2. Machine selon la revendication 1, **caractérisée en ce que**, au moyen de l'application d'une force d'entraînement (F) selon le sens opposée vers le au moins un bras d'entraînement (F) et/ou vers le au moins un bras d'amplification (13a, 13b), le au moins un bras de pression (7) tourne selon un angle maximum, en s'éloignant, de cette façon, de la tête d'infusion (2) jusqu'à une distance préalablement déterminée.

3. Machine selon la revendication 1, **caractérisée en ce que** la force de pression (P) correspond au moins à la force nécessaire pour causer la rupture d'une zone dans la susdite capsule (C) qui a été préalablement configurée pour une rupture plus facile lorsqu'elle est pressée contre la tête d'infusion (2).

4. Machine selon la revendication 2, **caractérisée en ce que** le susdit déplacement maximal correspond à une rotation du au moins un bras de pression (7) de au maximum, 90°, préférentiellement au maximum 45°, et plus préférentiellement au maximum 35°.

5. Machine selon la revendication 3, **caractérisée en ce que** la susdite force de pression (P) a une valeur d'au moins 8 bar, préférentiellement d'au moins 4 bar, et plus préférentiellement d'au moins 2 bar.

6. Machine selon une quelconque des revendications 1-5, **caractérisée en ce que** le au moins un bras d'entraînement (5) est agencé de telle sorte que, au moyen de l'application d'une force d'entraînement (F), il peut pivoter autour d'au moins un support de rotation, préférentiellement un arbre de rotation (6), placée fixe et alignée avec l'axe fixe (a), et essentiellement alignée, et préférentiellement centrée, avec l'ouverture d'admission (1), et **en ce que** le au moins un bras de pression (7) est agencé de sorte que, au moyen de l'application d'une force d'entraînement (F), il peut pivoter essentiellement à l'opposé de la susdite tête d'infusion (2), autour d'au moins un support de rotation, placé en position fixe et aligné avec l'axe fixe (b).

7. Machine selon une quelconque des revendications 1-6, **caractérisée en ce que** la susdite force d'entraînement (F), appliquée selon un sens, est transmise par une pluralité de paires de bras de transmission (9a, 9b, 11a, 11b, 13a, 13b, 16a, 16b) dès le au moins un bras d'entraînement (5) et/ou le au moins un bras d'amplification (13a, 13b), jusqu'au au moins un bras de pression (7), en déplaçant ainsi celui-ci d'une position ouverte (A), dans laquelle le au moins un bras de pression (7) se trouve à une distance de la susdite tête d'infusion (2) telle qu'il accueille une capsule (C) dans l'espace intermédiaire, jusqu'une position (B) fermée dans laquelle le au moins un bras de pression (7) presse la susdite capsule (C), avec une force de pression (P), contre la susdite tête d'infusion (2), et **en ce que** la susdite force d'entraînement (F), appliquée dans le sens opposée, est transmise par la susdite pluralité des susdites paires de bras de transmission (9a, 9b, 11a, 11b 13a, 13b, 16a, 16b) dès le au moins un bras d'entraînement (5) et/ou le au moins un bras d'amplification (13a, 13b), jusqu'au au moins un bras de pression (7), en déplaçant ainsi celui-ci de la susdite position fermée (B) jusqu'à une position dans laquelle la force de pression (P) vers la susdite capsule (C) est nulle et vers une distance limite du - au moins un - bras de pression (7) jusqu'à la susdite tête d'infusion (2), que correspond à la susdite position ouverte (A).

8. Machine selon la revendication 7, **caractérisée en ce que** la susdite pluralité de paires de bras de transmission (9a, 9b, 11a 11b, 13a, 13b, 16a, 16b) est placée dans les deux côtés de la susdite ouverture d'admission (1) et de la susdite tête d'infusion (2).

9. Machine selon une quelconque des revendications 1-8, **caractérisée en ce que** le au moins un bras d'entraînement (5) est lié, au moyen d'une arbre de rotation (6), placée fixe le long du susdit premier axe fixe (a), à une paire de seconds bras (9a, 9b), dont chacun est placé de sorte qu'il puisse pivoter conjointement avec le susdit bras d'entraînement (5) autour du susdit premier axe fixe (a), et lié par les respectives articulations à pivot (10a, 10b), placées le long d'un axe mobile (c), aux respectifs troisièmes bras (11a, 11b), dont chacun est placé de telle sorte qu'il peut tourner autour le susdit axe mobile (c), et lié au moyen de joints de pivot mobiles (12a, 12b), placés le long d'un axe mobile (d), aux respectifs bras d'amplification (13a, 13b), dont chacun est soutenu de telle sorte qu'il peut tourner autour des supports de rotation (14a, 14b) placés fixes le long du susdit deuxième axe fixe (e), et lié au moyen d'un arbre de rotation (15), placée le long d'un axe mobile (f), à une pair de respectifs quatrièmes bras (16a, 16b), dont chacun est placé de telle sorte qu'il peut tourner autour du susdit axe mobile (f) et un axe mobile (g), et lié au au moins un bras de pression (7) au moyen de respectifs joints de pivot mobiles (17a, 17b), placés le long du susdit axe mobile (g).

10. Machine selon la revendication 9, **caractérisée en ce que** les susdits axes mobiles (c, d, f, g) sont placés, y pouvant se déplacer, selon une position essentiellement parallèle par rapport à l'autre et par rapport aux susdits axes fixes (a, e, b).

11. Machine selon une quelconque des revendications 1-10, **caractérisée en ce que** la force d'entraînement (F) est produite manuellement et est transmise au au moins un bras d'entraînement (5) au moyen d'une manche (4) liée directement au susdit bras d'entraînement (5).

12. Machine selon la revendication 11, **caractérisée en ce que** la force d'entraînement (F) est produite au moyen d'un dispositif d'entraînement (21), préférablement au moyen d'un moteur électrique, et est transmise au au moins un bras d'entraînement (5) et/ou au au moins un bras d'amplification (13a, 13b) au moyen d'un élément d'engrenage (22), préférentiellement par un verrouillage positif, et particulièrement préféré du type crémaillère.

13. Machine selon la revendication 12, **caractérisée en ce que** le susdit élément d'engrenage (22) s'engage directement avec un respectif élément d'engrenage lié directement, préférentiellement de telle façon que cet élément d'engrenage et le susdit au moins un bras d'entraînement (5) et/ou le au moins un bras d'amplification (13a, 13b) façonnent une seule pièce.

14. Machine selon les revendications 11 ou 12, **caractérisée en ce que** la liaison de la susdite manche (4) avec le au moins un bras d'entraînement (5) et la liaison du susdit élément d'engrenage (22) avec le au moins un bras d'entraînement (5) et/ou le au moins un bras d'amplification (13a, 13b) sont exécutées par des moyens de fixation ou par des moyens de verrouillage positif.

15. Machine selon les revendications 11 ou 14, **caractérisée en ce que** le au moins un bras d'entraînement (5) est façonné comme une pièce unique avec la suscitée manche (4).

16. Machine selon une quelconque des revendications 1-15, **caractérisée en ce que** le au moins un bras d'entraînement (5) présente une configuration inclinée, de sorte qu'il peut tourner selon un angle égal ou supérieur à 90°, au moins partiellement, à l'intérieur de la susdite ouverture d'admission (1).

17. Machine selon une quelconque des revendications 1-16, **caractérisée en ce que** le au moins un bras d'amplification (13a, 13b) présente une configuration essentiellement triangulaire, avec la possibilité de pivoter autour de, au moins, l'extrémité placé fixe dans le support de châssis (3).

18. Machine selon une quelconque des revendications 1-17, **caractérisée en ce que** le au moins un bras de pression (7) est placé et présente une configuration, telle que, quand on trouve en position ouverte (A), il permet le passage d'une capsule (C) le long de l'extension de la susdite ouverture d' admission (2).

19. Machine selon une quelconque des revendications 1-18, **caractérisée en ce que** le au moins un bras de pression (7) présente au moins une surface de pression (7') à fin que, quand elle est en position fermée (B), soit appliqué une force de pression (P), préférablement essentiellement sur une surface sur une capsule (C), contre na susdite tête d'infusion.

20. Machine selon la revendication 19, **caractérisée en ce que** la susdite surface de pression (7') présente une forme et/ou une respective encoche du raccord telle qu'elle, au moins quand on est en la susdite position fermée (B), s'engage, au moins partiellement, avec la susdite capsule (C).

21. Machine selon une quelconque des revendications 19-20, **caractérisée en ce que** la susdite surface de pression (7') présente une projection de passage (7"), placée centrée avec la susdite (C), de telle sorte que la boisson obtenue par infusion laisse la susdite capsule (C), passe à travers la susdite projection de passage (7") et circule temporairement, avant qu'elle arrive à la sortie de boisson (20).

22. Machine selon une quelconque des revendications 19-21, **caractérisée en ce que** le au moins un bras de pression (7) présente une sortie boisson (20) de la boisson obtenue par extraction de l'infusion, qu'est liée, préférentiellement au moyen un tuyau, avec la sortie d'infusion de la machine.

23. Machine selon une quelconque des revendications 19-22, **caractérisée en ce que** la susdite sortie de boisson (20) est placée orientée obliquement vers le haut.

24. Machine selon la revendication 7, **caractérisée en ce que** les susdits bras de transmission (9a, 9b, 11a, 11b, 13a, 13b, 16a, 16b) présentent un format sensiblement plat.

25. Machine selon les revendications 1 et 7, **caractérisée en ce que** les susdits bras d'entraînement (5), de pression (7), d'amplification (13a, 13b), et les susdits bras de transmission (9a, 9b, 11a, 11b, 16a, 16b), sont fabriqués en métal ou en un matériel polymérique.

26. Procès pour l'extraction de boissons par infusion, en utilisant une machine selon une quelconque des revendications 1-25, **caractérisée en ce qu'**il comprend les étapes de :
- admission d'une capsule (C) à travers une ouverture d'admission (1) avec le au moins un bras d'entraînement (5), en une position ouverte (A),
- production et/ou application d'une force d'entraînement (F) le long d'une direction vers le au moins un bras d'entraînement (5) et/ou vers le au moins un bras d'amplification (13a, 13b), en entraînant ainsi le au moins un bras de pression (7) depuis une position ouverte (A) jusqu'à une position fermée (B),
- rupture d'une zone, préalablement configurée, de la susdite capsule (C), quand elle est pressée avec une force de pression (P) par le susdit bras de pression (7) contre la susdite tête d'infusion (2), jusqu'à une position fermée (B),
- écoulement à travers de la susdite capsule (C) par un liquide chaud qui circule depuis la susdite tête d'infusion (2) et circule à travers le au moins un bras de pression (7),
- production et application d'une force d'entraînement (F) dans le sens opposé vers le susdit au moins un bras d'entraînement (5) et/ou le au moins un bras d'amplification (13a, 13b), en retirant le susdit bras de pression (7) de la susdite position fermée (B) et en libérant la susdite capsule.

27. Procès selon la revendication 26, **caractérisée en ce que** la production de la susdite force (F) est produite manuellement, ou mécaniquement, au moyen d'un dispositif d'entraînement (22), préférentiellement du type électromécanique.

28. Procès selon les revendications 26 et 27, **caractérisée en ce que** le commencement de la procédure d'admission et du mouvement de la capsule (C) jusqu'à son placement en la susdite position fermée (B) est démarré au moyen d'une commande respective placé dans la machine (M'), préférentiellement une commande de sélection du type de la substance aromatique à utiliser.

29. Procès selon les revendications 26-28, **caractérisée en ce que** la procédure d'écoulement à travers la capsule (C) est démarré au moyen d'une commande respective placé dans la machine, préférentiellement une commande de sélection de la quantité de la boisson d'infusion à extraire.

30. Procès selon les revendication 26-29, **caractérisée en ce que** le mouvement de la susdite capsule (C) à l'intérieur de la machine, à partir de son admission jusqu'à l'ouverture d'admission (1), est poussée essentiellement par la force de gravité.
